# EUROPEAN PATENT SPECIFICATION

(11) **EP 4 221 969 B1**
(45) Date of publication and mention of the grant of the patent: **20.08.2025**
(21) Application number: 21873715.3
(22) Date of filing: 23.06.2021
(51) Int. Cl.: B30B 9/12, B09B 3/00, C02F 11/12, B02C 19/00

(54) **DEWATERING APPARATUS**
ENTWÄSSERUNGSVORRICHTUNG
APPAREIL DE DÉSHYDRATATION

(30) Priority: 29.09.2020 AU 2020903498
(43) Date of publication of application: 09.08.2023
(73) Proprietor: Blackall Station Pty Ltd, South Brisbane, Queensland 4101 (AU)
(72) Inventor: HUNGERFORD, Andrew Lloyd, Nambour, Queensland 4560 (AU)
(74) Representative: Dehns
(86) International application number: PCT/AU2021/050651
(87) International publication number: WO 2022/067371

(56) References cited:
- EP-B1- 0 790 122
- WO-A1-2019/087489
- JP-A- 2001 047 023
- KR-A- 20060 028 359
- US-A- 2 604 386
- US-A- 3 861 117
- US-A- 5 173 257
- US-A- 5 887 290

## Description

### Field of the Invention.

The present invention relates to a dewatering apparatus for the disposal of personal care items. In particular, the present invention relates to a method and apparatus for the disposal of toiletry and sanitary items such as incontinence pads and nappies.

### Background Art.

Whether in the form of incontinence pads for adults or nappies for babies, disposable incontinence pads are in are very wide usage. For instance, in the United States alone some 18 billion disposable incontinence pads are used and discarded annually. In Australia, approximately 800 million disposable incontinence pads are used every year, equating to around 145,000 cubic metres of landfill. In addition, each disposable incontinence pad can take over 300 years to degrade in landfill, meaning that the large volume of waste generated in the form of incontinence pads has a high and long-lasting environmental impact.

In environments in which large numbers of incontinence pads must be routinely disposed of, such as hospitals, nursing homes or the like, the handling and storage of incontinence pads can raise occupational health and safety issues. Further safety issues regarding the handling, by hospital or nursing home staff, of the bodily fluids contained within the incontinence pads may also arise.

In addition to this, the odour generated by used incontinence pads can create an unpleasant work environment for those workers responsible for the disposal of the pads.

Thus, there would be an advantage if it were possible to provide a way of safely and hygienically disposing of used incontinence pads, while at the same time reducing the volume of waste to be sent to landfill.

It will be clearly understood that, if a prior art publication is referred to herein, this reference does not constitute an admission that the publication forms part of the common general knowledge in the art in Australia or in any other country.

Throughout this specification, the term "comprising" and its grammatical equivalents shall be taken to have an inclusive meaning unless the context of use indicates otherwise.

JP 2001 047023 A discloses a treatment system for paper nappies. The nappies are ground into small pieces and mixed with water to reduce the bulkiness of the polymer absorbent within the nappy. The water, polymer absorbent and solid residue other than the polymer absorbent are then separated.

### Object of the Invention.

It is an object of the present invention to provide a dewatering apparatus which may overcome at least some of the abovementioned disadvantages, or provide a useful or commercial choice.

In one aspect, the invention resides broadly in a dewatering apparatus for the disposal of personal care items, the apparatus comprising a size reduction portion adapted to reduce the size of one or more of the items to be dewatered, and a separation portion in fluid communication with said size reduction portion, the separation portion adapted to substantially separate the liquid and solid components of the one or more items. The separation portion further comprises a solids outlet for supplying solids to a container and the dewatering apparatus includes a seal which seals the solids outlet during processing of pulp to remove liquid, and an actuator for removing the seal to pass the solids through the solids outlet.

In a preferred embodiment of the invention, the items to be dewatered comprise disposable incontinence pads.

It will be clear to a skilled addressee that the present invention provides a number of significant advantages over the prior art. For instance, the present invention allows the liquid and solid components of the items (such as disposable incontinence pads) to be separated prior to discarding the item, resulting in a significant reduction in the volume of waste sent to landfill. In addition, by removing the liquid component of the item which, in the case of disposable incontinence pads, may be bodily fluids, the biological hazards associated with the item may be significantly reduced.

Furthermore, in environments such as hospitals or nursing homes, where large numbers of items such as disposable incontinence pads are used, the ability to reduce the weight and volume of a disposable incontinence pad reduces both the amount of waste that must be stored in readiness for disposal, and also reduces the weight of waste that must be manually handled. In addition, the ability to remove the liquid components (such as bodily fluids) from the items reduces the odour given off by the items, leading to a more pleasant work environment for workers responsible for the handling and disposal of the items.

The apparatus may be portable. The apparatus may be self-contained. The apparatus may be automatically actuated responsive to closing a lid of the size reduction portion.

The apparatus may comprise a mixer for mixing an agent to be added to the size reduction portion. The mixer may include a perforated basket for receiving an agent block, and a reservoir for receiving the basket. The mixer may further include a pump. The pump may be submersed within the reservoir and circulate water therein to dissolve a mineral block and form an aqueous solution for passing to the size reduction portion. The agent may facilitate processing of the gel polymer in the item.

The apparatus may include a water reservoir for supplying water to the mixing reservoir and/or the size reduction portion. The size reduction portion may include a macerator. The macerator may be electrically powered.

The separation portion may include a conical separator which is more efficient than a cylindrical separator. The conical separator may include a perforated wall through which liquid can pass. The conical separator may include a tapered screw. The separator may include a pulp inlet for receiving pulp from the size reduction portion and a liquid outlet for supplying liquid to a waste pipe. The separator further includes a solids outlet which may supply solids to a bagger. The outlet may include a nozzle for being received in a bag.

The system may include a bagger for bagging solids from the separation portion. The bagger may include a holder for holding a bag. The holder may include a tube for receiving a bag. The tube may be tapered. The bagger may further include a cap for releasably capping the base of the holder. The bag may extend above the holder for tying when full, and the cap may be released to remove the full bag from the base of the holder. The bagger may include a sensor for sensing that the bag is full, an inhibitor for inhibiting operation of the separator when sensing that the bag is full, and an indicator for indicating that the bag is full.

The bagger may include a housing for housing the holder. The bagger may further include an unfolder for unfolding an end of the bag as it is removed from the apparatus. The unfolder may include one or more fingers.

In some embodiments of the invention, the dewatering apparatus comprises one or more housings. Preferably, the housing is adapted to house both the size reduction portion and the separation portion of the apparatus. However, in some embodiments the size reduction portion may be housed in a first housing, and the separation portion may be housed in a second housing. In this embodiment of the invention, the size reduction portion and the separation portion may be maintained in fluid communication with one another using any suitable means.

Preferably, the apparatus includes one or more inlets through which the items enter the size reduction portion. The items may be fed to the apparatus manually, automatically (such as via a conveyor or the like) or under gravity (such as through a chute, from a hopper, bag or in any other suitable manner).

The apparatus may be fed continuously with items, or may be fed with a predetermined number of items. In this way, the apparatus may be operated continuously or as a batch processor.

The size reduction portion of the apparatus may achieve the reduction in size of the items using any suitable method. For instance, the items may be crushed, ground, shredded, disintegrated, torn or the like, or any combination thereof. In some embodiments of the invention, the size reduction portion of the apparatus comprises one or more size reduction means. The size reduction means may be of any suitable form, such as, but not limited to, blades, discs, impellers, wheels, grinding media, hammers, rollers or the like or any combination thereof. The size reduction means may operate continuously or may operate for a predetermined length of time. If the size reduction means are operated for a predetermined length of time, the actual length of time may be determined based on the weight of items, the volume of items, the number of items, the type of items, the type of size reduction means, the number of size reduction means, or the like or any combination thereof.

In some embodiments of the invention, the size reduction may be carried out in a chamber or the like within the size reduction portion.

The size reduction means may be operated using any suitable power source. For instance, the size reduction means may be operated using mains power, a generator, or the like. Alternatively, the size reduction means may be operated pneumatically, such as by making use of an air compressor. Alternatively, the size reduction means may be operated using a combination of electrical power, pneumatics and/or hydraulics.

The size reduction may be performed dry or wet. Preferably, however, the size reduction is performed wet. The wet size reduction may be conducted in the presence of any suitable fluid medium, such as, but not limited to, water. In some embodiments of the invention, one or more additives may be added to the fluid medium. The additives may be adapted to perform one or more functions, including disinfecting, leaching, bleaching, dissolving or the like, or any combination thereof. One suitable additive may include sodium/calcium chloride. In this embodiment of the invention, the sodium/calcium chloride may be adapted to dissolve certain material in the items, such as acrylic.

The one or more additives may be added to the fluid medium in any suitable form, such as a solid, a liquid, a solution, or a combination thereof.

In a preferred embodiment of the invention, the size reduction portion may comprise one or more outlets through which a slurry of the items (or pieces thereof) and the fluid medium may flow.

If the size reduction portion of the apparatus is operated continuously, one or more classifiers may be provided to allow the passage of pieces of the items smaller than a predetermined size to leave the size reduction portion through the one or more outlets, while retaining pieces larger than a predetermined size within the size reduction portion for further size reduction. Any suitable classifier may be used, such as, but not limited to, one or more screens, hydrocyclones, centrifuges or the like.

In embodiments of the invention in which the size reduction portion is operated as a batch processor, it is preferred that, during operation of the size reduction portion, the size reduction portion is isolated. In this embodiment of the invention, the one or more inlets and the one or more outlets may be closed during operation of the size reduction means. Once the operating cycle of the size reduction means is complete, the one or more outlets and the one or more inlets may be reopened simultaneously, or the one or more outlets may be opened to allow the slurry to exit the size reduction portion prior. In this embodiment of the invention, the one or more inlets may subsequently be opened to allow a new batch of items to enter the size reduction portion.

Once the slurry of the items (or pieces thereof) and the fluid medium exit the size reduction portion, the slurry may then be transferred to the separation portion. The transfer of the slurry may be achieved using any suitable technique, such as, but not limited to, transferring the slurry under gravity to the separation portion, or pumping the slurry to the separation portion using, for instance, a pump.

The separation portion of the apparatus may comprise any suitable form. However, in a preferred embodiment of the invention, the separation portion comprises a vessel in which the slurry may be contained. Any suitable vessel may be used, such as, but not limited to, a tank, sump, container, or the like.

In a preferred embodiment of the invention, the separation portion may be provided with means for removing at least a portion of the liquid from the slurry. In a more preferred embodiment of the invention, the separation portion may be provided with means for removing a substantial proportion of the liquid from the slurry. In a most preferred embodiment of the invention the separation portion may be provided with means for removing substantially all of the liquid from the slurry.

Any suitable means for removing the liquid from the slurry may be provided.

For instance, the solid portion of the slurry may be allowed to settle, and the liquid may be skimmed or decanted from the top. Alternatively, the slurry may be heated to evaporate the liquid.

In some embodiments of the invention, the slurry may be filtered to remove the liquid. Filtration may be performed using membranes, filter paper or any other suitable filtration media. The filtration may be performed with or without the aid of a vacuum. However, in some embodiments of the invention, the vessel may be provided with one or more apertures through which excess liquid may flow. In a preferred embodiment of the invention, the vessel may be provided with a plurality of perforations adapted to allow the flow of liquid therethrough while retaining the solids portion of the slurry within the vessel.

In yet another embodiment of the invention, the solid components within the slurry may be compressed in order to remove the liquid therefrom.

In some embodiments of the invention, the liquid removed from the slurry may be collected (such as for recycling), or may be discarded (such as into a drain or sewer).

In a preferred embodiment, the separation portion is adapted to use two or more separation techniques to separate the liquid and solid portions of the slurry. The two or more separation techniques may be any suitable techniques, such as any suitable combination of those previously mentioned.

In one embodiment, the separation portion may comprise two techniques for separating the liquid and solid components of the slurry. Preferably, the first technique comprises allowing excess liquid to filter through one or more apertures provided in the walls and/or ends of the vessel. Filtration may take place for a predetermined time prior to the commencement of the second separation technique.

Preferably, the second separation technique comprises compressing the solid portion of the slurry to remove liquid therefrom. Any suitable compression means may be used to compress the solid portion of the slurry, such as one or more presses, rams or the like. The compression means may be operated using any suitable technique. For instance, the compression means may be operated manually, using electrical power, or using, for instance, hydraulic or pneumatic rams, or any combination thereof.

The compression means may be used to compress the solid portion of the slurry for a predetermined time, based on one or more operational parameters (weight of the slurry, percentage of solids in the slurry, type of solids etc). Alternatively, the length of the compression cycle may be adjudged manually (i.e. the solids are compressed until an operator sees that no further liquid is being expelled from the separation portion).

Preferably, liquid expelled from the separation portion during the compression cycle exits the separation portion through the same plurality of apertures through which liquid exits the separation portion during the first separation technique.

In some embodiments of the invention, a further processing step may be inserted between the separation techniques. Any suitable further processing step may be inserted, although in embodiments of the invention in which an additive is added to the fluid medium, the further processing step may be a period of time to allow the additive to perform its function. For instance, in the case of sodium/calcium chloride, the further processing step may be to allow the sodium/calcium chloride to dissolve any acrylic in the slurry for a predetermined period of time. This may assist in making the separation of the liquid and solid components more effective.

At the completion of the compression cycle, it is envisaged that substantially all of the liquid will have been removed from the solid components of the slurry. Thus, all that will remain in the separation portion of the apparatus at the completion of the compression cycle will be the substantially dewatered solids. The compressed solids may be ejected from the separation portion using any suitable technique. For instance, the compressed solids may be manually removed, or automatically ejected. Preferably, however, the compressed solids are automatically ejected into a container, thereby reducing the amount of manual handling required. Any suitable container may be used, such as a bin, bag or the like.

Once the compressed solids have been ejected, the separation portion may be automatically or manually reset in preparation for the next batch of slurry.

In an alternative embodiment of the invention, the separation portion may include one or more inlets through which slurry enters the separation portion, one or more liquid outlets through which liquid removed from the slurry exits and one or more solid outlets through which at least partially dewatered solids from the slurry may exit.

In this embodiment of the invention, the separation portion may be provided with one or more dewatering members adapted to at least partially dewater the solids. Any suitable dewatering members may be provided, such as one or more pistons, rams or the like. More preferably, the dewatering members may include one or more screw conveyors. It will be understood that, in this embodiment of the invention, the term "screw conveyor" is intended to refer to a device including a shaft and a screw flight extending at least partially about the shaft. Thus, the screw may comprise a screw feeder, auger, Archimedes screw or the like.

In a preferred embodiment of the invention, the separation portion includes a treatment chamber in which the screw conveyor is located. Preferably, the screw conveyor is adapted to rotate relative to the treatment chamber about the longitudinal axis of the screw conveyor. Thus, the screw conveyor may be associated with a drive portion, such as, but not limited to, one or more motors or the like. It is envisaged that the drive shaft of the screw conveyor may extend at least partially through an end wall of the treatment chamber so as to be in communication with the drive portion.

Preferably, the screw conveyor is located within the treatment chamber such that the longitudinal axis of the screw conveyor is substantially parallel to, or (in some embodiments) co-axial with, a longitudinal axis of the treatment chamber. Preferably, in use, the treatment chamber is oriented so that the longitudinal axis of the treatment chamber is substantially horizontal.

In a preferred embodiment of the invention, the outer diameter of the screw conveyor may be slightly less than the inner diameter of the treatment chamber. In this way, the outer portion of the screw conveyor (e.g. the outer portion of the screw flight) may be located in close proximity to the inner surface of the treatment chamber. While the treatment chamber may be of any suitable cross-sectional shape, it is envisaged that, in a preferred embodiment of the invention, the treatment chamber may have a substantially circular cross-sectional shape along at least a portion of its length so that the outer portion of the screw conveyor may be located in close proximity to (or abutment with) the inner surface of the treatment chamber along substantially the entire length of the treatment chamber.

In a preferred embodiment of the invention, a slurry inlet may be provided at or adjacent a first end of the treatment chamber, and an outlet for at least partially dewatered solids may be provided at or adjacent an opposed second end of the treatment chamber. The inlet and the solid outlet may be provided in end walls of the treatment chamber or in a side wall thereof. One or more outlets for liquid removed from the slurry may be located at any suitable point in the treatment chamber. Preferably, the one or more outlets for liquid removed from the slurry may be located in a side wall of the treatment chamber. In a preferred embodiment of the invention, a plurality of outlets for liquid removed from the slurry may be provided. The outlets may be provided at any suitable location on the side wall of the treatment chamber. For instance, the outlets may be located along substantially the entire length of the treatment chamber and/or about substantially the entire circumference of the treatment chamber.

The treatment chamber may have substantially the same diameter along its length, or the diameter of the treatment chamber may vary along its length. In a preferred embodiment of the invention, the treatment chamber may taper along a portion of its length. Preferably, the tapered portion may be located at or adjacent the second end of the treatment chamber (i.e. at the end of the treatment chamber in which the outlet for the at least partially dewatered solids is located). In a particular embodiment of the invention, the outlet for the at least partially dewatered solids may be located in an end wall of the treatment chamber, and the treatment chamber may taper towards the outlet. In this embodiment of the invention, the screw conveyor may be provided with a substantially conical portion located within the tapering portion of the treatment chamber.

It is envisaged that, in use, slurry may enter the treatment chamber through the inlet located at or adjacent the first end thereof. The dewatering member, in the form of a screw conveyor, is preferably actuated when (or before) slurry is introduced to the treatment chamber, such that the screw conveyor is rotating about its longitudinal axis when slurry is introduced to the treatment chamber.

During use, liquid in the slurry may exit the treatment chamber through the one or more liquid outlets in the side wall of the treatment chamber. The liquid exiting the treatment chamber may be released onto the ground (for instance, to flow into a drain or sewer) or may be collected in a container or vessel for recycling, treatment (such as to remove pathogens, impurities or the like) or later disposal.

As previously stated, liquid exiting the treatment chamber may be collected. The liquid may flow via a conduit (e.g. a pipe or hose) or may be pumped to a collection vessel located distant from the treatment chamber. Alternatively, the separation portion may include a collection chamber into which liquid exiting the treatment chamber flows. In this embodiment of the invention, the collection chamber may be located substantially co-axial with the treatment chamber. In a preferred embodiment, the diameter of the collection chamber may be greater than the diameter of the treatment chamber such that the treatment chamber is located substantially within the collection chamber. It is envisaged that liquid collected in the collection chamber may be either removed periodically (such as at the completion of dewatering of a batch of slurry, or when the volume of liquid in the collection chamber reaches a predetermined level) or continuously (such as in situations in which the separation portion is operated continuously).

As the screw conveyor rotates, solids in the slurry may be carried by the action of the screw conveyor towards the solids outlet. During the movement of the solids along the chamber under the action of the screw conveyor, the solids may be compressed against the inner wall of the treatment chamber by the screw flights or drive shaft (such as the conical portion of the screw conveyor, where provided) and/or may be compacted between screw flights, thereby removing at least a portion of the liquid from the solids. Liquid removed in this manner may exit the treatment chamber through the plurality of liquid outlets, thereby resulting in relatively dry solids exiting the separation portion through the solids outlet.

Solids exiting the separation portion may have any suitable liquid content. For instance, the solids exiting the separation portion may contain up to 40% w/w liquid. More preferably, the solids exiting the separation portion may contain between about 10% w/w and 30% w/w liquid. Still more preferably, the solids exiting the separation portion may contain between about 15% w/w 25% w/w liquid.

The separation portion may be fabricated from any suitable material, such as, but not limited to, metal, plastic, glass or the like, or any suitable combination thereof. In a preferred embodiment of the invention, however, the walls of the treatment chamber and/or collection chamber may be fabricated from plastic. The screw conveyor may be fabricated from any suitable material, such as, but not limited to, metal, plastic, rubber or the like.

In some embodiments of the invention, the apparatus may be cleaned after the ejection of the solids and prior to the loading of one or more further items into the size reduction portion. The cleaning cycle may either be begun once the solids have been ejected from the separation portion, or once the slurry has exited the size reduction portion.

In some embodiments, cleaning may be carried out manually. However, in a preferred embodiment of the invention, the cleaning is performed automatically. In this embodiment, a cleaning fluid may be provided to the size reduction portion of the apparatus. Any suitable cleaning fluid may be used. In some embodiments of the invention, the cleaning fluid comprises water. The cleaning fluid may have one or more cleaning additives added to it, such as, but not limited to, detergent, disinfectant, bleach or the like. If a detergent is present, it is preferred that the detergent is a non-foaming detergent.

The size reduction portion of the apparatus may be allowed to soak in the cleaning fluid (and additives, if present) or the cleaning fluid may be agitated using any suitable technique to improve the efficiency of cleaning.

At the completion of the cleaning cycle in the size reduction portion, the cleaning fluid may be transferred to the separation portion. The cleaning fluid may be transferred using any suitable technique, although it is preferred that the cleaning fluid is transferred using the same technique used to transfer the slurry from the size reduction portion to the separation portion.

The cleaning fluid may be allowed to simply flow through the separation portion and be discarded. Alternatively, the cleaning fluid may be retained within the separation portion in order to clean the separation portion. Cleaning may be carried out by either allowing the separation portion to soak in the cleaning fluid, or by agitating the cleaning fluid using any suitable technique.

At the completion of the cleaning cycle, the apparatus may be reset in preparation for the processing of a new batch of items.

In some embodiments of the invention, the various stages of processing within the apparatus may be controlled manually or semi-manually. In this embodiment of the invention, an operator may control the length of time of each stage of processing within the apparatus. In addition, an operator may control the transfer of the items between the size reduction portion and the separation portion.

Preferably, however, the various stages of processing within the apparatus may be automatically controlled. In this embodiment of the invention, a control system may be used to control one or more of the length of each stage of processing, the loading of items into the size reduction portion, the operation of the size reduction portion, the transfer of the items between the size reduction portion and the separation portion, the operation of the separation portion, the ejection of the dewatered solids and the cleaning cycle.

Any suitable control system may be used. In a preferred embodiment of the invention, the control system comprises a processor. The processor may be built into the apparatus, or the processor may be a remote computer connected to the apparatus. In embodiments of the invention in which the control system is built into the apparatus, the apparatus may be provided with one or more control interfaces adapted to allow an operator to control the apparatus. The control interfaces may be of any suitable form, such as, but not limited to, one or more screens, buttons, levers, panels or the like or any combination thereof. Preferably, the control system includes one or more timers.

In some embodiments of the invention, the program run by the control system may be set, such that the operational parameters will be the same for every cycle and will not be capable of being altered. However, in an alternative embodiment, the operational parameters may be capable of alteration such that a user may enter the operational parameters, or the system will be provided with one or more sensors (such as, but not limited to, weight sensors) which may relay information to the control system. In this embodiment of the invention, the control system may alter the operational parameters based on the information relayed from the one or more sensors.

The operational parameters may include any suitable parameters, such as, but not limited to, length of the cycle, length of the operation of the size reduction stage, length of the operation of the separation stage, volume of fluid medium and/or additive added, length of time for the additive to perform its function, amount of pressure applied by a compression means or the like.

In another aspect, the invention resides broadly in a method of separating liquid and solid components of a personal care item comprising the steps of:
a) providing one or more items to a size reduction portion of a dewatering apparatus;
b) reducing the size of the one or more items;
c) transferring the one or more items to a separation portion of the dewatering apparatus; and
d) substantially separating the liquid and solid components of the item.

Any suitable item may be used in the method of the present invention. However, in a preferred embodiment of the invention, the item is a disposable incontinence pad.

The method of the invention may be operated as a continuous method or may be operated as a batch method.

In some embodiments of the present invention, the method may further comprise the step of ejecting the solid components of the item from the apparatus after the liquid and solid components of the item have been substantially separated.

In a further embodiment of the invention, the method may further comprise the step of cleaning the apparatus after the liquid and solid components of the item have been substantially separated.

### Brief Description of the Drawings.

An embodiment of the invention will be described with reference to the following drawings in which:
- Figure 1: illustrates the dewatering apparatus according to an embodiment of the present invention;
- Figure 2A: illustrates a cross-sectional view of the dewatering apparatus according to an embodiment of the present invention;
- Figure 2B: illustrates a cross-sectional view of the dewatering apparatus according to an embodiment of the present invention;
- Figure 3A: illustrates a cross-sectional view of the dewatering apparatus according to an alternative embodiment of the present invention; and
- Figure 3B: illustrates a cross-sectional view of the dewatering apparatus according to an alternative embodiment of the present invention.
- Figure 4: illustrates an isometric view of a separation portion of a dewatering apparatus according to an embodiment of the present invention.
- Figure 5: illustrates a cross-sectional view of a separation portion of a dewatering apparatus according to an embodiment of the present invention.
- Figure 6A: is a front perspective view of a dewatering apparatus according to another embodiment of the present invention.
- Figure 6B: is a rear perspective view of the dewatering apparatus of Figure 6A.
- Figure 7: is an exploded rear perspective view of the dewatering apparatus of Figure 6B.
- Figure 8: is a schematic view of the internal components of the apparatus of Figure 6A.
- Figure 9: is an exploded perspective view of a separator and bagger of the dewatering apparatus of Figure 6A.
- Figure 10: is a sectional perspective view of the separator and bagger of Figure 9.
- Figure 11: is a sectional view of the separator of Figure 9.
- Figure 12: is a closeup sectional view of the separator and bagger interface of Figure 9.
- Figure 13A: is a sectional view of a separator and bagger of the dewatering apparatus of Figure 9.
- Figure 13B: is a perspective view of the separator and bagger of Figure 13A showing the removal of the bag holder.
- Figures 13C-E: show the steps in removing the bag from the bag holder of Figure 13B.

### Detailed Description of the Drawings.

It will be appreciated that the drawings have been provided for the purposes of illustrating preferred embodiments of the present invention and that the invention should not be considered to be limited solely to the features as shown in the drawings.

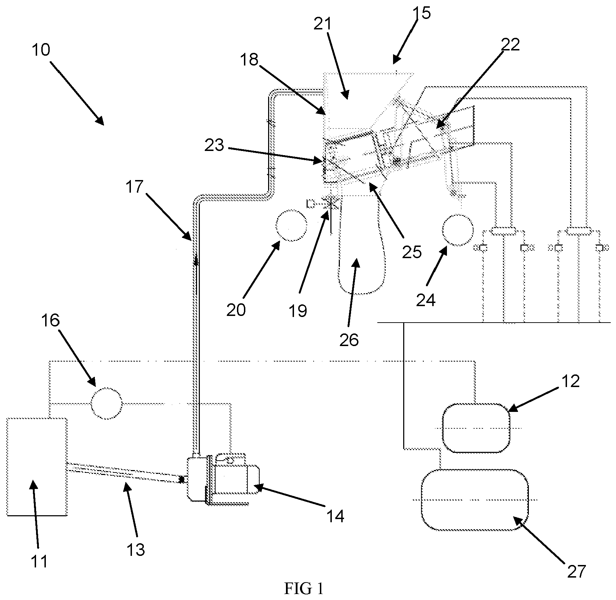

In Figure 1 there is shown a dewatering apparatus 10 according to an embodiment of the present invention. The apparatus 10 comprises a size reduction portion 11 into which disposable incontinence pads (not shown) may be loaded. Once the disposable incontinence pads are loaded, an aqueous sodium/calcium chloride solution is added to the size reduction portion 11. Impellers (not shown) inside the size reduction portion 11 may then be actuated by a compressor 12 and air cylinder 27, causing the incontinence pads to be disintegrated.

Once the incontinence pads have been sufficiently disintegrated, the resulting slurry flows under gravity through a pipe 13 to a pump 14, from where the slurry is transferred through a pipe 17 to the separation portion 15 of the apparatus 10. A timer 16 may be used to control the operation of both the compressor 12 and the pump 14. In this way, the length of time for which the impellers (not shown) are actuated may be set at a predetermined period and controlled by the timer 16.

In the separation portion 15, excess water is allowed to filter through perforations 18 of the separation vessel 21. The excess water is discharged through a valve 19 to a sewer or drain (not shown). After a predetermined period of time has elapsed (as measured by a second timer 20), the valve 19 closes.

The slurry in the separation vessel 21is then contained within the separation vessel 21 for a predetermined period of time controlled by the timer 20 to allow the sodium/calcium chloride in the slurry to dissolve any acrylic in the incontinence pads (not shown). After this, the valve 19 opens and compression means in the form of a pneumatic cylinder 22 is actuated, thereby compressing any solids in the slurry against a wall 23 of the separation vessel 21. The compression of the solids forces liquid out of the solids. The liquid passes through the perforations 18 and flows through valve 19 and into a sewer or drain (not shown). The length of time for which the pneumatic cylinder 22 compresses the solids is controlled by a third timer 24.

At the completion of the compression cycle, the pneumatic cylinder 22 returns to its home position, and a gate 25 is opened, thereby allowing the compressed solids (not shown) to be ejected from the separation vessel 21 and into a bag 26 for collection.

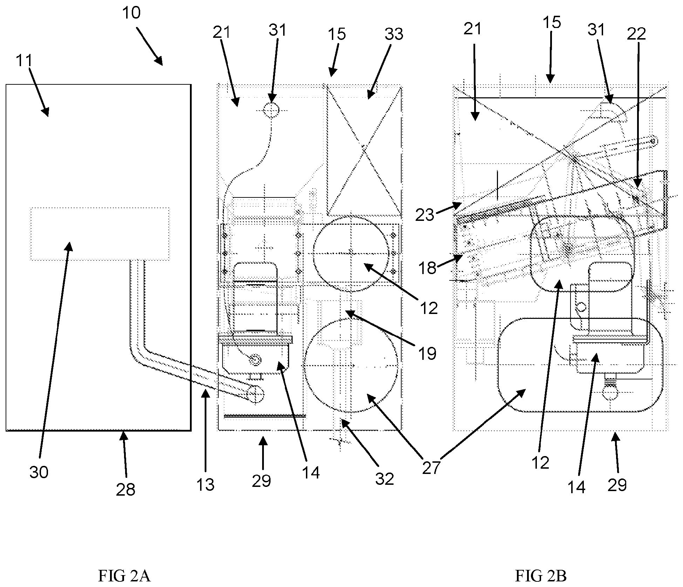

In Figures 2A and 2B there are shown cross-sectional views of the apparatus 10 according to an embodiment of the present invention. The apparatus 10 comprises a size reduction portion 11 and a separation portion 15 interconnected with a pipe 13. The size reduction portion 11 is housed within a first housing 28 while the separation portion 15 is housed within a second housing 29.

The size reduction portion 11 comprises a chamber 30 into which incontinence pads (not shown) may be placed. Sodium chloride solution may also be added to the chamber 30. The incontinence pads (not shown) may then be disintegrated using one or more impellers (not shown).

Once sufficient size reduction has taken place, the resulting slurry is transferred under gravity through pipe 13 to a pump 14, from where is it pumped to a separation vessel 21 through an inlet 31 in the vessel 21. A pneumatic cylinder 22 is used to compress the slurry within the separation vessel, thereby forcing liquid out through perforations 18 in a wall 23 of the vessel 21. This removed liquid exits the apparatus 10 through a valve 19 and drain pipe 32.

In the embodiment of the invention shown in Figures 2A and 2B, the housing 29 for the separation portion 15 houses the control system (timers etc) 33, as well as an air cylinder 27 and compressor 12.

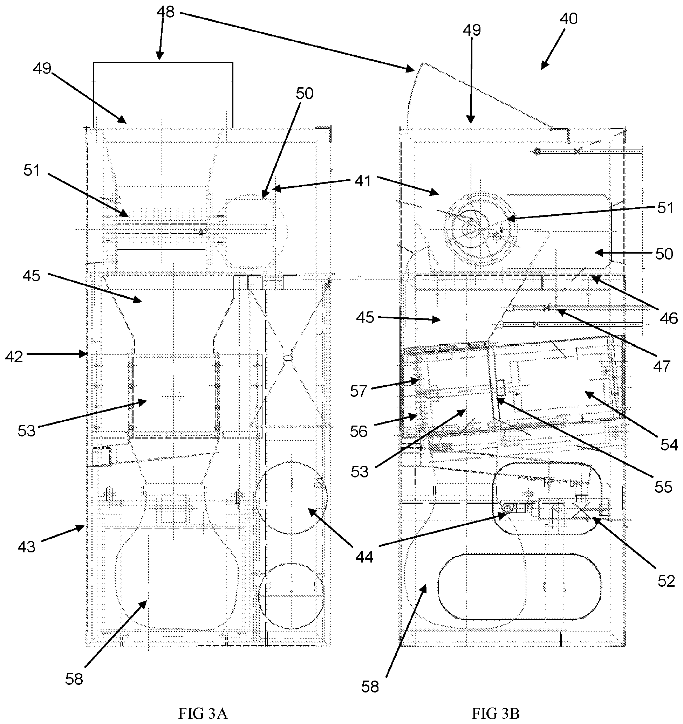

Turning now to Figures 3A and 3B there are shown cross-sectional views of an apparatus 40 according to an alternative embodiment of the invention.

The apparatus 40 comprises a size reduction portion 41 and a separation portion 42. Both the size reduction portion 41 and the separation portion 42 are housed within a single housing 43.

In use, compressor 44 is actuated causing the mixing chamber 45 to fill with water to the level indicated by dotted line 46. Sodium chloride may also be added to the mixing chamber 45. If desired, agitation of the water and sodium chloride may be achieved by opening the air valve 47.

The lid 48 of the apparatus 40 is opened to allow a user to place incontinence pads (not shown) into the apparatus 40 through opening 49. Once the incontinence pads (not shown) are in place the cutter drive 50 is actuated, causing the cutter 51 to begin operation. In a preferred embodiment of the invention, the cutter drive 50 will only operate when lid 48 is closed. Preferably, the cutter 51 only operates for a relatively short period of time (for instance, 15 seconds).

The cut incontinence pads (not shown) fall under gravity into mixing chamber 45. Here, the chloride in the water will dissolve the acrylic in the incontinence pads (not shown) in a relatively short space of time (e.g. 1 to 2 minutes).

Once this step of the process is complete, valve 52 opens, allowing all water including all dissolved matter to drain out of the apparatus 42 to the sewer. The remaining solid matter falls under gravity into compression chamber 53 wherein pneumatic cylinder 54 actuates a ram 55 compresses the solid material against a wall 56 of the compression chamber 53, thereby forcing liquid out through perforations 57 in the wall 56.

Once liquid has been removed from the solid material, the ram 55 withdraws, and the compressed material drops into a bag 58. This procedure will repeat until the bag 58 is full.

Once the bag 58 is full, a vacuum may be applied to the bag 58 in order to seal the bag 58. A user may then remove the bag 58 from the apparatus 40 and insert a new empty bag.

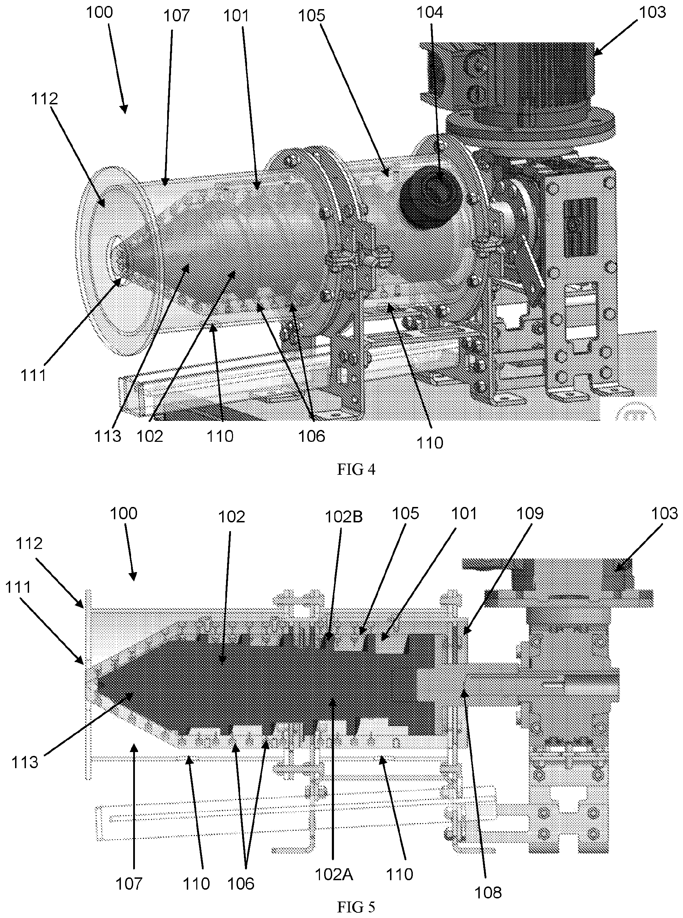

In Figures 4 and 5, an isometric view and a cross-sectional view, respectively, of a separation portion 100 of a dewatering apparatus according to an embodiment of the present invention is illustrated. The separation portion 100 includes a treatment chamber 101 in which an Archimedes screw conveyor 102 is located co-axial therewith. The screw conveyor 102 is adapted for rotation about its longitudinal axis relative to the treatment chamber 101, and the rotation of the screw conveyor 102 is actuated by motor 103. The screw conveyor includes a shaft 102A about which is positioned a screw flight 102B. A drive shaft 108 extends through an end wall 109 of the treatment chamber 101 to connect the screw conveyor 102 to the motor 103.

Slurry is introduced to the treatment chamber 101 through inlet 104 located in a side wall 105 of the treatment chamber 101. Liquid in the slurry exits the treatment chamber 101 through a plurality of liquid outlets 106 in the side wall 105 of the treatment chamber 101 and is collected in a collection chamber 107 surrounding the treatment chamber 101 and located substantially co-axial therewith. Liquid collected in the collection chamber 107 may be removed through openings 110. Liquid removed through the openings 110 may be discarded, treated or recycled as required.

Solids entering the treatment chamber 101 through the inlet 104 are carried by the screw conveyor 102 towards the solids outlet 111 in an end wall 112 of the treatment chamber 101. As can be seen particularly in Figure 5, the diameter of the shaft 102A of the screw conveyor 102 increases from the inlet 104 to the solids outlet 111 such that, as the solids are carried towards the solids outlet 111, they are compressed or compacted between the shaft 102A and the inner surface of the side wall 105, thereby removing liquid from the solids.

At the end of the treatment chamber 101 adjacent the solids outlet 111, the treatment chamber 101 tapers towards the solids outlet 111. Similarly, the screw conveyor 102 is provided with a conical portion 113 adjacent the solids outlet 111. As solids are carried towards the solids outlet 111, they are further compressed between the conical portion 113 and the inner surface of the tapered portion of the treatment chamber 101, thereby removing further liquid from the solids. Thus, relatively dry solids are then discharged from the separation portion 100 through the solids outlet 111.

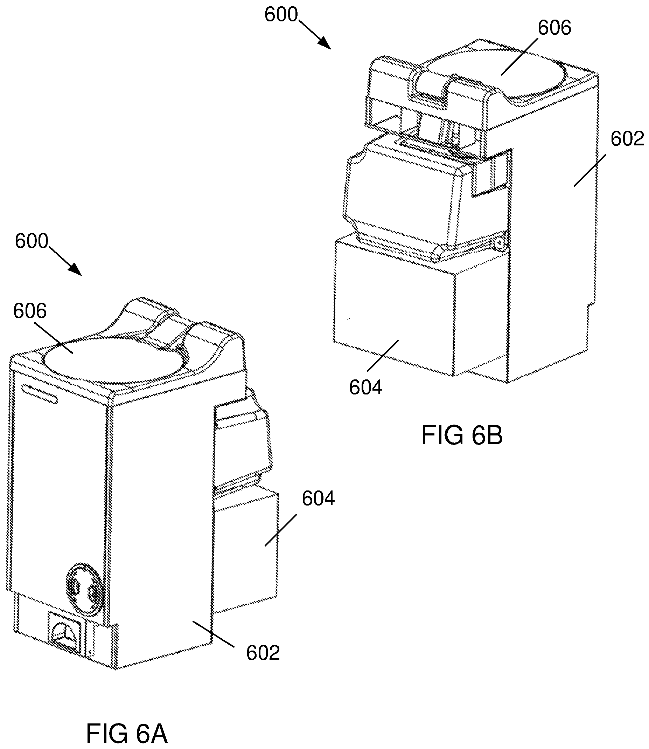

Figure 6A and 6B shows a be portable, self-contained dewatering apparatus 600 for the disposal of personal care items, as before. The apparatus 600 comprises a top-loading size reduction portion 602 adapted to reduce the size of the items to be dewatered. The size reduction portion 602 includes and electrically powered macerator.

A separation portion 604 is in fluid communication with the size reduction portion 602. The separation portion 604 is adapted to substantially separate the liquid and solid components of the one or more items, as before. The apparatus 600 is automatically actuated responsive to closing a lid 606 of the size reduction portion 602.

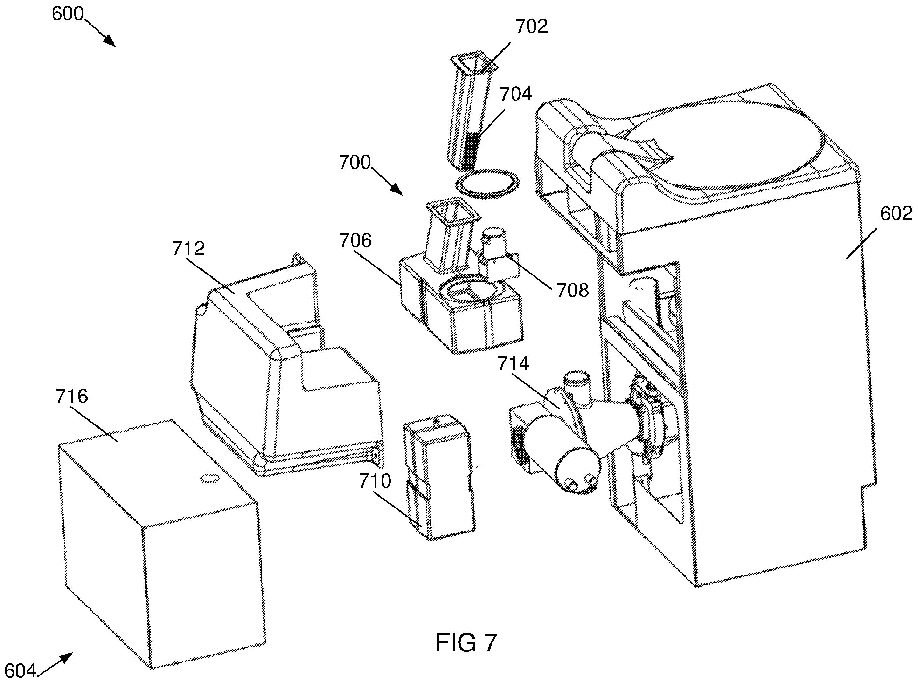

Turning to Figure 7, the apparatus 600 comprises a mixer 700 for mixing a processing mineral agent to be added to the size reduction portion 602. The mixer 700 includes a removable perforated basket 702 for receiving an agent block 704. The mixer 700 also includes a reservoir 706 for receiving the basket 702.

The mixer 700 further includes a pump 708, submersed within the mixing reservoir 706, to circulate water therein to dissolve the mineral block 704 and form an aqueous solution for passing, via mineral solutions reservoir 710, to the size reduction portion 602. The mineral agent facilitates processing of the gel polymer in the item, and in particular deactivating the super absorbent gel polymer in the sanitary pad item. The salt arrests the absorbent nature of the gels and allows them to be broken down more easily in the separator. Without the mineral additive these gel pellets become large and difficult to manage.

The apparatus 600 also includes a water reservoir 712 for supplying water to the size reduction portion 602. The mixing reservoir 706 and the water reservoir 712 are supplied via mains water and regulated by electronic float levels. The separation portion 604 includes a conical separator 714 which is more efficient that a cylindrical separator. The separation portion 604 also includes a rear cover 716 for covering the separator 714.

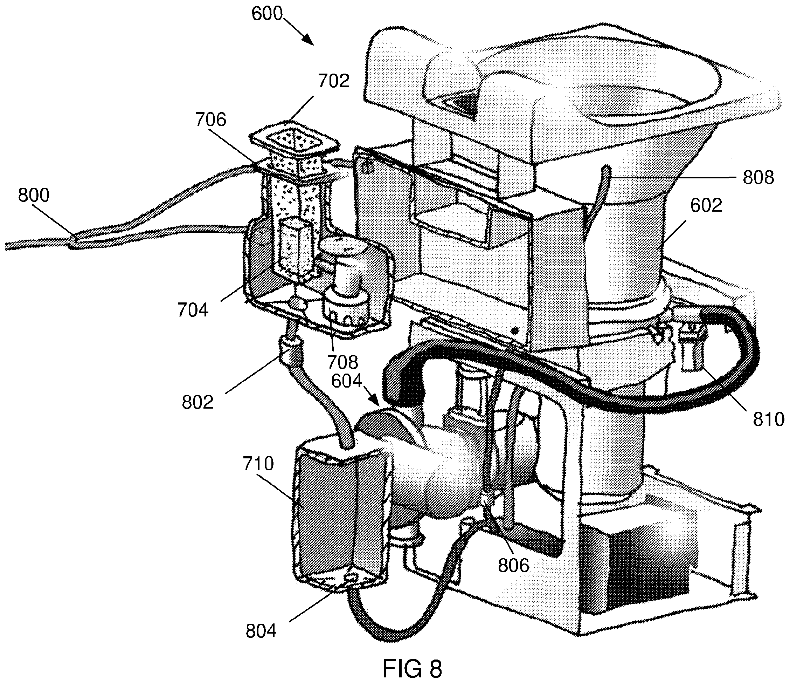

Figure 8 shows key hose connections of the apparatus 600. Fresh water pipes 800 supply water to the water reservoir 712 and the mixing reservoir 706. Once mixed, a solenoid valve 802 is opened to release the aqueous solution from the mixing reservoir 706 to the mineral solutions reservoir 710. The mineral solutions reservoir 710 has a low set outlet 804 to stop the accumulation of any mineral granules, before passing the mineral solution to the macerating size reduction portion 602.

A solenoid valve 806 is used to switch from mineral solution to fresh water provided to the macerating size reduction portion 602, once the mineral solution is delivered. The liquids enter the size reduction portion 602 through top filler line 808. Once the fluids are delivered to the size reduction portion 602, the maceration process occurs. Then a ball valve 810 is opened to release macerated pulp from the size reduction portion 602 to the separation portion 604.

As previously mentioned, the mixer 700 further includes a pump 708 to circulate water within the mixing reservoir 706 to dissolve the mineral block 704 and form an aqueous solution for passing, via mineral solutions reservoir 710, to the size reduction portion 602.

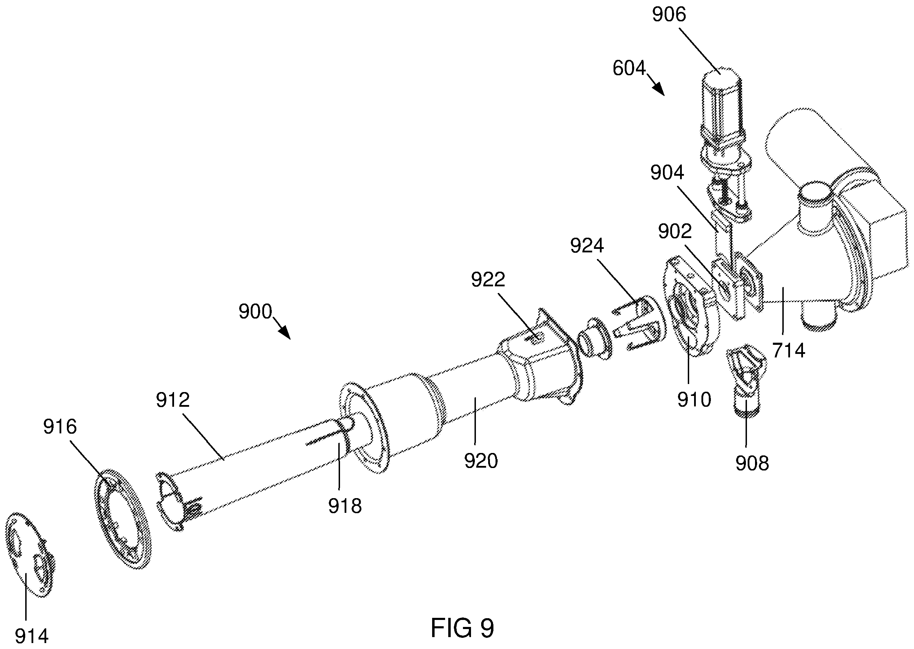

Figure 9 shows the separation portion 604 with conical separator 714, and a bagger 900 for bagging solids from the separation portion 604.

The separator 714 includes a solids outlet 902 for supplying solids to the bagger 900. The separator 714 also includes a blade seal 904 which seals the solids outlet 902 during processing of the pulp to remove liquid, and an actuator 906 for removing the seal 904 to pass the solids through the solids outlet 902 to a bag in the bagger 900. A waste collector 908 collects solid and liquid waste that escapes the blade seal 904 and diverts it into a waste pipe. Similarly, a waste hole 910 of the bagger 900 collects solid and liquid waste that escapes the bag and diverts it into the waste pipe.

The bagger 900 includes a tapered tubular holder 912 for holding the internal bag receiving the solids. The bagger 900 further includes a releasable cap 914 for releasably capping the base of the holder 912. A face plate 916 is also provided. End flex panels 918 of the holder 912 allow a user to hold the bag within the holder 912 prior to releasing in the bin.

The bagger 900 includes a collection housing 920, mounted to face plate 916, for housing the holder 912 and collecting overflow solids and liquids from the bag and directing them to the waste hole 910. Furthermore, the bagger 900 includes a sensor 922 for sensing that the bag is full, an inhibitor for inhibiting operation of the separation portion 604 when sensing that the bag is full, and a visual light indicator and audible alarm for indicating that the bag is full.

The bagger 900 further includes an unfolder 924, with four fingers, for automatically unfolding an end of the bag as it is removed from the apparatus 600.

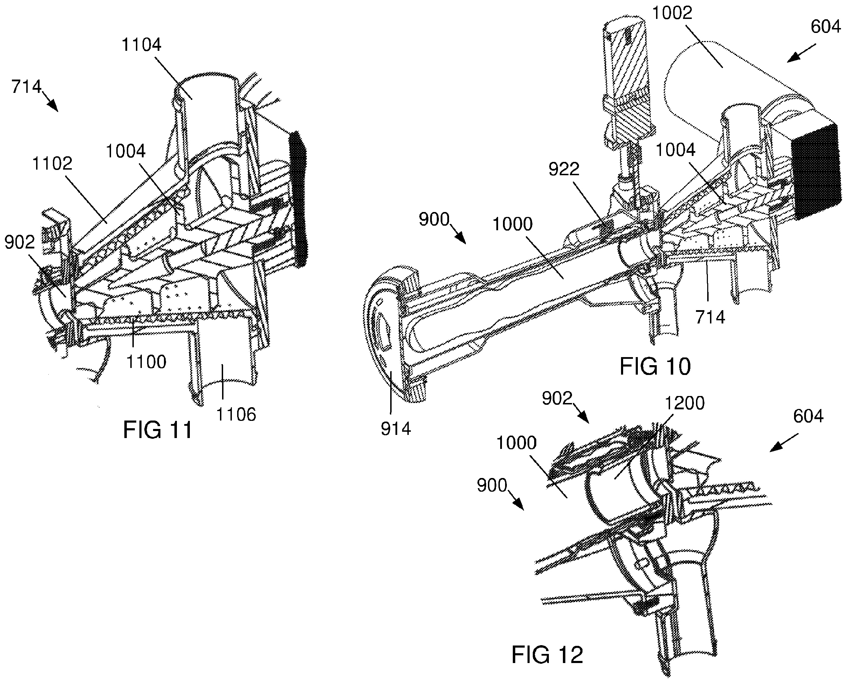

Figure 10 shows the internal bag 1000 within the bagger 900, and that receives the solids from the separation portion 604. The separation portion 604 includes a drive motor 1002 that drives a tapered screw 1004 of the conical separator 714. When the collection bag 1000 is full, the user turns the lid 914 anticlockwise to remove the lid 914, and holder 912 holding the bag 1000.

As can best be seen in Figure 11, the conical separator 714 includes an internal perforated conical wall 1100, within an outer housing 1102, through which liquid can pass and drain into the waste pipe 1106. The separator may include an upper pulp inlet 1104 for receiving pulp from the size reduction portion 602 and a lower liquid outlet 1106 for supplying liquid to the waste pipe. The tapered screw 1004 drives the remaining solids through the outlet 902 and into the bag 1000.

As can best be seen in Figure 12, the outlet 902 includes an extrusion nozzle 1200 for being received in the bag 1000.

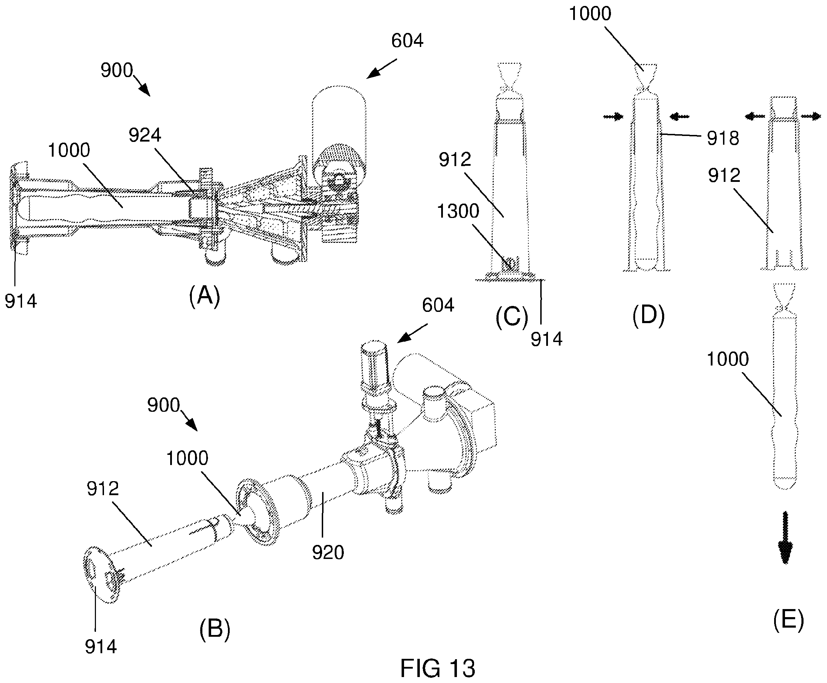

Removal of the bag 1000 is now described with reference to Figure 13.

The user turns the lid 914 anticlockwise to remove the lid 914, and holder 912 holding the bag 1000 (Figure 13B). During removal, the unfolder 924 automatically unfolds an end of the bag 1000.

As can be seen in Figure 13C, the full bag 1000 extends above the holder 912 for tying. Snap fit lid retainers 1300 are pressed to remove the lid 914 from the holder 912.

As can be seen in Figure 13D, the end flex panels 918 of the holder 912 are pressed together to hold the bag 1000 without the need for the user to touch the bag 1000.

As can best be seen in Figure 13E, the flex panels 918 are released to discard the tied bag 1000 in the bin.

Those skilled in the art will appreciate that the present invention may be susceptible to variations and modifications other than those specifically described.

## Claims

1. A dewatering apparatus (600) for the disposal of personal care items, the apparatus (600) comprising:
a size reduction portion (602) adapted to reduce the size of one or more of the items to be dewatered; and
a separation portion (604) in fluid communication with said size reduction portion (602), the separation portion (604) adapted to substantially separate the liquid and solid components of the one or more items;
wherein the separation portion (604) includes a solids outlet (902) for supplying solids to a container (1000);
**characterized in that**:
the dewatering apparatus (600) includes a seal (904) which seals the solids outlet (902) during processing of pulp to remove liquid, and an actuator (906) for removing the seal (904) to pass the solids through the solids outlet (902).

2. A dewatering apparatus (600) as claimed in claim 1, comprising a mixer (700) for mixing an agent (704) to be added to the size reduction portion (602), the agent (704) preferably facilitating processing of gel polymer or absorbent material in the item.

3. A dewatering apparatus (600) as claimed in claim 2, wherein:
the mixer (700) includes a basket (702) for receiving an agent block (704), and a reservoir (706) for receiving the basket (702); or
the mixer (700) further includes a pump (708) or agitator submersed within the reservoir (706) and to circulate water therein to dissolve a mineral block (704) and form an aqueous solution; or
the dewatering apparatus (600) further includes a water reservoir (712) for supplying water to the size reduction portion (602).

4. A dewatering apparatus (600) as claimed in claim 1, wherein the size reduction portion (602) includes a macerator, the macerator preferably being electrically powered.

5. A dewatering apparatus (600) as claimed in claim 1, wherein the separation portion (604) includes a conical separator (714) with a tapered screw (1004).

6. A dewatering apparatus (600) as claimed in claim 1, wherein the separation portion (604) includes a perforated wall (1100) through which liquid can pass.

7. A dewatering apparatus (600) as claimed in claim 1, wherein the separation portion (604) includes a pulp inlet (1104) for receiving pulp from the size reduction portion (602) and a liquid outlet (1106) for supplying liquid to a waste pipe.

8. A dewatering apparatus (600) as claimed in claim 1, wherein:
the outlet (902) includes a nozzle (1200) for being received in a container (1000).

9. A dewatering apparatus (600) as claimed in claim 1, further including a bagger (900) for bagging solids from the separation portion (604).

10. A dewatering apparatus (600) as claimed in claim 9, wherein the bagger (900) includes a tubular holder (912) for holding a bag (1000).

11. A dewatering apparatus (600) as claimed in claim 10, further including a cap (914) for releasably capping the holder (912), the bag (1000) extending above the holder (912) for tying when full, and the cap (914) being released to remove the full bag (1000) from the base of the holder (912).

12. A dewatering apparatus (600) as claimed in claim 9, wherein the bagger (900) includes:
a sensor (912) for sensing that the bag (1000) is full; the bagger (900) preferably including an inhibitor for inhibiting operation of the size reduction portion (602) and/or separation portion (604) when sensing that the bag (1000) is full, or an indicator for indicating that the bag (1000) is full.

13. A dewatering apparatus (600) as claimed in claim 9, wherein the bagger includes:
an unfolder (924) with fingers for unfolding an end of the bag (1000) as it is removed from the apparatus (600).

14. A dewatering apparatus (600) as claimed in claim 1, wherein the apparatus (600) is: portable and/or self-contained; or automatically actuated responsive to closing a lid (606) of the size reduction portion (602).

15. A method of separating liquid and solid components of personal care items comprising the steps of:
a) providing one or more personal care items to a size reduction portion (602) of a dewatering apparatus (600);
b) reducing the size of the one or more items;
c) transferring the one or more items to a separation portion (604) of the dewatering apparatus (600); and
d) substantially separating the liquid and solid components of the items;
wherein the separation portion (604) includes a solids outlet (902) for supplying solids to a container (1000);
**characterized in that**:
the dewatering apparatus (600) includes a seal (904) which seals the solids outlet (902) during processing of pulp to remove liquid, and an actuator (906) for removing the seal (904) to pass the solids through the solids outlet (902).

## Patentansprüche

1. Entwässerungseinrichtung (600) zur Entsorgung von Körperpflegeartikeln, wobei die Einrichtung (600) Folgendes umfasst:
einen Zerkleinerungsabschnitt (602), der dazu ausgelegt ist, die Größe eines oder mehrerer der zu entwässernden Artikel zu verringern; und
einen Trennabschnitt (604) in Fluidverbindung mit dem Zerkleinerungsabschnitt (602), wobei der Trennabschnitt (604) dazu ausgelegt ist, die flüssigen und festen Bestandteile des einen oder der mehreren Artikel im Wesentlichen voneinander zu trennen;
wobei der Trennabschnitt (604) einen Feststoffauslass (902) zum Zuführen von Feststoffen zu einem Behälter (1000) einschließt;
**dadurch gekennzeichnet, dass**:
die Entwässerungseinrichtung (600) eine Dichtung (904), die den Feststoffauslass (902) während der Verarbeitung von Zellstoff zum Entfernen von Flüssigkeit abdichtet, und einen Aktor (906) zum Entfernen der Dichtung (904), um die Feststoffe durch den Feststoffauslass (902) hindurchtreten zu lassen, einschließt.

2. Entwässerungseinrichtung (600) nach Anspruch 1, umfassend einen Mischer (700) zum Mischen eines Mittels (704), das dem Zerkleinerungsabschnitt (602) hinzugefügt werden soll, wobei das Mittel (704) bevorzugt die Verarbeitung von Gelpolymer oder absorbierendem Material in dem Artikel erleichtert.

3. Entwässerungseinrichtung (600) nach Anspruch 2, wobei:
der Mischer (700) einen Korb (702) zur Aufnahme eines Wirkstoffblocks (704) und ein Reservoir (706) zur Aufnahme des Korbs (702) einschließt; oder
der Mischer (700) weiter eine Pumpe (708) oder ein Rührwerk einschließt, die in dem Reservoir (706) eingetaucht sind und Wasser darin zirkulieren lassen, um einen Mineralblock (704) aufzulösen und eine wässrige Lösung zu bilden; oder
die Entwässerungseinrichtung (600) weiter ein Wasserreservoir (712) zum Zuführen von Wasser zu dem Zerkleinerungsabschnitt (602) einschließt.

4. Entwässerungseinrichtung (600) nach Anspruch 1, wobei der Zerkleinerungsabschnitt (602) einen Aufweicher einschließt, wobei der Aufweicher bevorzugt elektrisch angetrieben ist.

5. Entwässerungseinrichtung (600) nach Anspruch 1, wobei der Trennabschnitt (604) einen konischen Separator (714) mit einer Kegelschraube (1004) einschließt.

6. Entwässerungseinrichtung (600) nach Anspruch 1, wobei der Trennabschnitt (604) eine perforierte Wand (1100) einschließt, durch die Flüssigkeit hindurchtreten kann.

7. Entwässerungseinrichtung (600) nach Anspruch 1, wobei der Trennabschnitt (604) einen Zellstoffeinlass (1104) zum Aufnehmen von Zellstoff aus dem Zerkleinerungsabschnitt (602) und einen Flüssigkeitsauslass (1106) zum Zuführen von Flüssigkeit zu einer Abfallleitung einschließt.

8. Entwässerungseinrichtung (600) nach Anspruch 1, wobei:
der Auslass (902) eine Düse (1200) einschließt, die in einem Behälter (1000) aufgenommen werden kann.

9. Entwässerungseinrichtung (600) nach Anspruch 1, weiter einschließend eine Absackvorrichtung (900) zum Absacken von Feststoffen aus dem Trennabschnitt (604).

10. Entwässerungseinrichtung (600) nach Anspruch 9, wobei die Absackvorrichtung (900) eine rohrförmige Halterung (912) zum Halten eines Beutels (1000) einschließt.

11. Entwässerungseinrichtung (600) nach Anspruch 10, weiter einschließend eine Kappe (914) zum lösbaren Verschließen der Halterung (912), wobei sich der Beutel (1000) über die Halterung (912) hinaus erstreckt, um bei Füllung verschlossen zu werden, und die Kappe (914) gelöst wird, um den vollen Beutel (1000) von der Basis der Halterung (912) zu entfernen.

12. Entwässerungseinrichtung (600) nach Anspruch 9, wobei die Absackvorrichtung (900) Folgendes einschließt:
einen Sensor (912) zum Erfassen, dass der Beutel (1000) voll ist; wobei die Absackvorrichtung (900) bevorzugt eine Sperrvorrichtung zum Sperren des Betriebs des Zerkleinerungsabschnitts (602) und/oder des Trennabschnitts (604) einschließt, wenn erfasst wird, dass der Beutel (1000) voll ist, oder eine Anzeige zum Anzeigen, dass der Beutel (1000) voll ist.

13. Entwässerungseinrichtung (600) nach Anspruch 9, wobei die Absackvorrichtung Folgendes einschließt:
einen Entfalter (924) mit Fingern zum Entfalten eines Endes des Beutels (1000), wenn dieser aus der Einrichtung (600) entfernt wird.

14. Entwässerungseinrichtung (600) nach Anspruch 1, wobei die Einrichtung (600): tragbar und/oder in sich geschlossen ist; oder automatisch als Reaktion darauf betätigt wird, dass ein Deckel (606) des Zerkleinerungsabschnitts (602) geschlossen wird.

15. Verfahren zum Trennen von flüssigen und festen Bestandteilen von Körperpflegeartikeln, umfassend die Schritte von
a) Bereitstellen eines oder mehrerer Körperpflegeartikel an einen Zerkleinerungsabschnitt (602) einer Entwässerungseinrichtung (600);
b) Verringern der Größe des einen oder der mehreren Artikel;
c) Übertragen des einen oder der mehreren Artikel zu einem Trennabschnitt (604) der Entwässerungseinrichtung (600); und
d) im Wesentlichen Trennen der flüssigen und festen Bestandteile der Artikel voneinander; wobei der Trennabschnitt (604) einen Feststoffauslass (902) zum Zuführen von Feststoffen zu einem Behälter (1000) einschließt;
**dadurch gekennzeichnet, dass**:
die Entwässerungseinrichtung (600) eine Dichtung (904), die den Feststoffauslass (902) während der Verarbeitung von Zellstoff zum Entfernen von Flüssigkeit abdichtet, und einen Aktor (906) zum Entfernen der Dichtung (904), um die Feststoffe durch den Feststoffauslass (902) hindurchtreten zu lassen, einschließt.

## Revendications

1. Appareil de déshydratation (600) pour l'élimination d'articles de soins personnels, l'appareil (600) comprenant :
une partie de réduction de taille (602) adaptée pour réduire la taille d'un ou de plusieurs des articles destinés à être déshydratés ; et
une partie de séparation (604) en communication fluidique avec ladite partie de réduction de taille (602), la partie de séparation (604) étant adaptée pour séparer substantiellement les composants liquides et solides desdits un ou plusieurs articles ;
dans lequel la partie de séparation (604) inclut une sortie de solides (902) pour la délivrance de solides à un récipient (1000) ;
**caractérisé en ce que** :
l'appareil de déshydratation (600) inclut un joint (904) qui scelle la sortie de solides (902) pendant un traitement d'une pâte pour éliminer un liquide, et un actionneur (906) permettant de retirer le joint (904) afin de faire passer les solides à travers la sortie de solides (902).

2. Appareil de déshydratation (600) tel que revendiqué dans la revendication 1, comprenant un mélangeur (700) permettant de mélanger un agent (704) destiné à être ajouté à la partie de réduction de taille (602), l'agent (704) facilitant de préférence un traitement d'un polymère gel ou d'un matériau absorbant dans l'article.

3. Appareil de déshydratation (600) tel que revendiqué dans la revendication 2, dans lequel :
le mélangeur (700) inclut un panier (702) permettant de recevoir un bloc d'agent (704), et un réservoir (706) permettant de recevoir le panier (702) ; ou
le mélangeur (700) inclut en outre une pompe (708) ou un agitateur immergé à l'intérieur du réservoir (706) et pour faire circuler l'eau dans celui-ci de manière à dissoudre un bloc minéral (704) et former une solution aqueuse ; ou
l'appareil de déshydratation (600) inclut en outre un réservoir d'eau (712) permettant d'alimenter en eau la partie de réduction de taille (602).

4. Appareil de déshydratation (600) tel que revendiqué dans la revendication 1, dans lequel la partie de réduction de taille (602) inclut un macérateur, le macérateur étant de préférence alimenté électriquement.

5. Appareil de déshydratation (600) tel que revendiqué dans la revendication 1, dans lequel la partie
de séparation (604) inclut un séparateur conique (714) avec une vis conique (1004).

6. Appareil de déshydratation (600) tel que revendiqué dans la revendication 1, dans lequel la partie de séparation (604) inclut une paroi perforée (1100) à travers laquelle un liquide peut passer.

7. Appareil de déshydratation (600) tel que revendiqué dans la revendication 1, dans lequel la partie de séparation (604) inclut une entrée de pâte (1104) permettant de recevoir une pâte à partir de la partie de réduction de taille (602) et une sortie de liquide (1106) permettant d'alimenter en un liquide un tuyau de décharge.

8. Appareil de déshydratation (600) tel que revendiqué dans la revendication 1, dans lequel :
la sortie (902) inclut une buse (1200) permettant d'être reçue dans un récipient (1000).

9. Appareil de déshydratation (600) tel que revendiqué dans la revendication 1, incluant en outre un ensacheur (900) permettant d'ensacher des solides provenant de la partie de séparation (604).

10. Appareil de déshydratation (600) tel que revendiqué dans la revendication 9, dans lequel l'ensacheur (900) inclut un support tubulaire (912) permettant de maintenir un sac (1000).

11. Appareil de déshydratation (600) tel que revendiqué dans la revendication 10, incluant en outre un bouchon (914) permettant de boucher de manière amovible le support (912), le sac (1000) s'étendant au-dessus du support (912) pour être attaché lorsque plein, et le bouchon (914) étant libéré pour retirer le sac (1000) plein de la base du support (912).

12. Appareil de déshydratation (600) tel que revendiqué dans la revendication 9, dans lequel l'ensacheur (900) inclut :
un détecteur (912) permettant de détecter que le sac (1000) est plein ; l'ensacheur (900) incluant de préférence un inhibiteur permettant d'inhiber tout fonctionnement de la partie de réduction de taille (602) et/ou de la partie de séparation (604) lorsqu'il détecte que le sac (1000) est plein, ou un indicateur permettant d'indiquer que le sac (1000) est plein.

13. Appareil de déshydratation (600) tel que revendiqué dans la revendication 9, dans lequel l'ensacheur inclut :
un dispositif de dépliage (924) avec des doigts permettant de déplier une extrémité du sac (1000) lorsqu'il est retiré de l'appareil (600).

14. Appareil de déshydratation (600) tel que revendiqué dans la revendication 1, dans lequel l'appareil (600) est : portable et/ou autonome ; ou automatiquement actionné en réponse à une fermeture d'un couvercle (606) de la partie de réduction de taille (602).

15. Procédé de séparation de composants liquides et solides d'articles de soins personnels comprenant les étapes consistant à :
a) fournir un ou plusieurs articles de soins personnels à une partie de réduction de taille (602) d'un appareil de déshydratation (600) ;
b) réduire la taille desdits un ou plusieurs articles ;
c) transférer lesdits un ou plusieurs articles à une partie de séparation (604) de l'appareil de déshydratation (600) ; et
d) séparer substantiellement les composants liquides et solides des articles ; dans lequel la partie de séparation (604) inclut une sortie de solides (902) pour la délivrance de solides à un récipient (1000) ;
**caractérisé en ce que** :
l'appareil de déshydratation (600) inclut un joint (904) qui scelle la sortie de solides (902) pendant un traitement d'une pâte de façon à éliminer un liquide, et un actionneur (906) permettant de retirer le joint (904) de façon à faire passer les solides à travers la sortie de solides (902).
